# EUROPEAN PATENT APPLICATION

(11) **EP 1 798 964 A1**
(43) Date of publication of application: **20.06.2007**
(21) Application number: 05270094.5
(22) Date of filing: 16.12.2005
(51) Int. Cl.: H04N 5/335, H04N 5/232

(54) **Image sensor coprocessor**

(71) Applicant: STMicroelectronics (Research & Development) Limited, Marlow, Buckinghamshire SL7 1YL (GB)
(72) Inventor: HOLMES, Andrew, EH12 7TY, Edinburgh (GB); DUNCAN, ED, EH34 5EZ, Pencaitland (GB)
(74) Representative: Jones, Keith William

(57) **Abstract**

An image sensor coprocessor is disclosed comprising an SMIA image sensor interface for accepting data from an SMIA image sensor, a device interface for transmitting and receiving instructions and data from a device and a protocol translation module, wherein the protocol translation module enables instructions received at the device interface to be translated to instructions for the SMIA image sensor interface and a sensor data stream from the SMIA image sensor interface to be translated to a device data stream for the device interface. The image sensor coprocessor can also be modified such that the device interface is a USB interface enabling USB compliant devices to be utilised with SMIA image sensors.

## Description

The present invention relates to an image sensor coprocessor and particularly to an image sensor coprocessor for use with Standard Mobile Imaging Architecture image sensors.

The growth of image sensors within mobile cellular telephone products has required significant developments in a number of areas including image quality, power consumption and module size. One aspect of this was the development of the Standard Mobile Imaging Architecture (SMIA) standard for image sensors to allow mobile phone manufacturers to select image sensor modules from a variety of providers. Details of the SMIA standard can be found at http://www.smia-forum.org/, the contents of which is herein incorporated by reference.

Other devices, such as laptop computers and web cameras, are constrained to other personal computer data interface standards such as USB (Universal Serial Bus) 1.0 and USB 2.0. Image sensors for these devices have been developed separately from the mobile telephone market and use a proprietary standard depending on the manufacturer. As such, these devices require proprietary coprocessors for each image sensor to transport the image information to the device using a particular format, such as USB.

The problem associated with prior art coprocessors is that they must be used with a particular image sensor and cannot be used with multiple image sensors.

An object of the invention is to provide a coprocessor which enables any image sensor which adheres to the SMIA protocol to be used with devices that do not adhere to the SMIA protocol.

According to a first aspect of the present invention there is provided an image sensor coprocessor comprising an SMIA image sensor interface for accepting data from an SMIA image sensor, a device interface for transmitting and receiving instructions and data from a device, and a protocol translation module, wherein the protocol translation module enables instructions received at the device interface to be translated to instructions for the SMIA image sensor interface and sensor data from the SMIA image sensor interface to be translated to device data for the device interface.

Preferably, the SMIA image sensor interface comprises a camera control interface module for transmitting and receiving instructions and a camera control processor for receiving the sensor data.

Preferably, the device interface is a Universal Serial Bus (USB) interface.

Preferably, the USB interface conforms to one or more of the following standards: USB 2.0 standard; or USB 1.0 standard.

Preferably, the sensor data is a sensor video stream and, as such, the device data is a device video stream.

Preferably, the coprocessor further comprises a video processing module to process the device video stream prior to being received at the device interface.

Alternatively, the coprocessor enables the device video stream received at the device interface to be unprocessed.

Alternatively or further preferably, the coprocessor comprises two or more SMIA image sensor interfaces and two or more sets of sensor data are processed by the protocol translation module which then generates two or more sets of device data for the device interface.

According to a second aspect of the present invention there is provided a web camera comprising an image sensor coprocessor according to the first aspect of the present invention.

According to a third aspect of the present invention there is provided a portable computer comprising an image sensor coprocessor according to the first aspect of the present invention.

According to a fourth aspect of the present invention there is provided a personal digital assistant (PDA) comprising an image sensor coprocessor according to the first aspect of the present invention.

Embodiments of the present invention will now be described, by way of example only, with reference to the accompanying drawings, in which;
Fig. 1 illustrates a prior art image sensor and image sensor coprocessor;
Fig. 2 illustrates an image sensor coprocessor according to the present invention enabled to interface with an SMIA image sensor and a personal computer;
Fig. 3 illustrates a prior art SMIA image sensor and a mobile telephone coprocessor; and
Fig. 4 illustrates an SMIA image sensor and an image sensor according to the present invention showing the coprocessor modules.

The now ubiquitous mobile cellular telephone, or mobile phone, and increasing demand for additional functions incorporated within it have driven improvements in image sensors and, in particular, in CMOS image sensors. The mobile phone manufacturers developed a standard to enable them to swap in any image sensor, regardless of resolution or manufacturer, with their mobile telephone format coprocessor.

Image sensors traditionally used for other applications, such as web cameras and the like, continue to require to be individually designed with a proprietary image sensor and corresponding coprocessor or a single chip design with the image sensor chip also performing the functions of the coprocessor. Both of these options have a development time which can be extremely long.

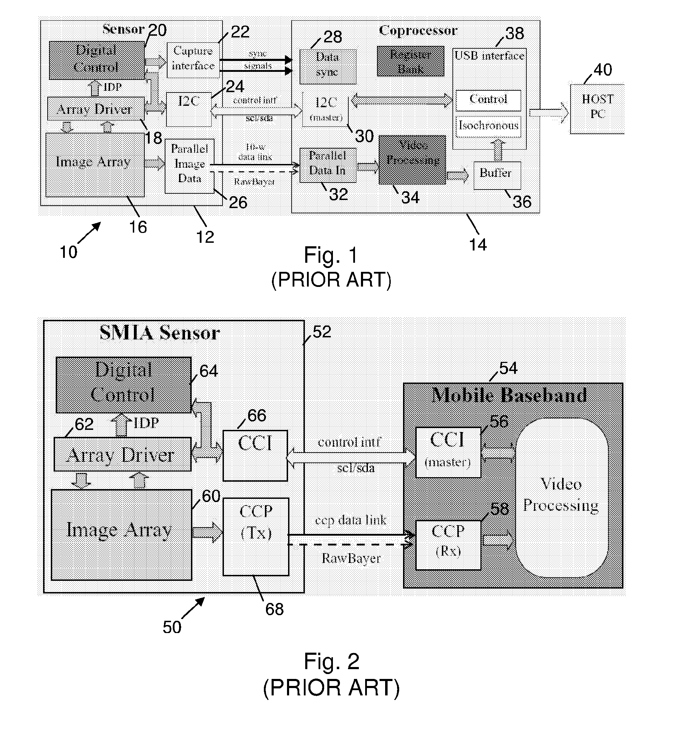

As shown in Fig. 1, a prior art web camera system 10 has an image sensor 12 and a coprocessor 14. The sensor 12 has an image array 16, array driver 18 and digital control 20, as well as three communication interfaces: a capture interface 22; a I2C (Inter-Integrated Circuit) interface 24; and a parallel image data interface 26.

The coprocessor 14 has three corresponding interfaces: a data sync interface 28, I2C master interface 30 and a parallel image data in interface 32. The coprocessor also comprises a video processing module 34, a buffer 36 and device interface, which, in this example, is a USB interface 38.

The USB interface 38, in this example, is connected to a personal computer 40.

The I2C bus between the coprocessor 14 and image sensor 12, embodied by the I2C interface 24 and I2C master interface 30, enables instructions from the USB interface 30 to directly control the image sensor 12. The parallel data link, between the parallel image data interface 26 and the parallel image data in interface 32, is a high bandwidth data link which allows the transmission of the image data from the sensor to the coprocessor. Synchronisation signals are sent from the capture interface 22 to the data sync interface 28 to allow correct transfer of data.

The video processing module 34 processes the raw video data from the image sensor and performs various operations, such as colour correction and video compression, before transmitting the processed video via a buffer 36 to the USB interface 38 and consequently to the personal computer 40.

SMIA image sensors are not compatible with coprocessors of the type shown in Fig. 1. As shown in Fig. 2, a mobile phone 50 has an SMIA image sensor 52 and a mobile baseband processor 54. The mobile baseband processor 54 is not a dedicated image coprocessor and operates many of the other functions required by the mobile phone 50. The mobile baseband processor 54 does incorporate a camera control processor 56 and a camera control interface 58 to enable communication with the SMIA image sensor 52 directly using the SMIA standard.

The SMIA image sensor 52 comprises an image array 60, an array driver 62, a digital control 64, a corresponding camera control interface 66 and a corresponding camera control processor 68.

The fact that the mobile phone is now the most significant sector of the image sensor imaging market means that developments for these products attract the most technological investment. One area, in particular, is the drive to reduce the physical module size. Such small camera modules are attractive to non-mobile markets such as laptops and PDAs. However, as they do not use the same video data interface as mobile phones, they cannot interface directly to the SMIA image sensors.

The present invention enables an SMIA camera module to be used with personal computer, and other devices, data interfaces, such as USB 2.0, to give non-mobile markets rapid access to the developments made in the cameras developed for mobile phone products.

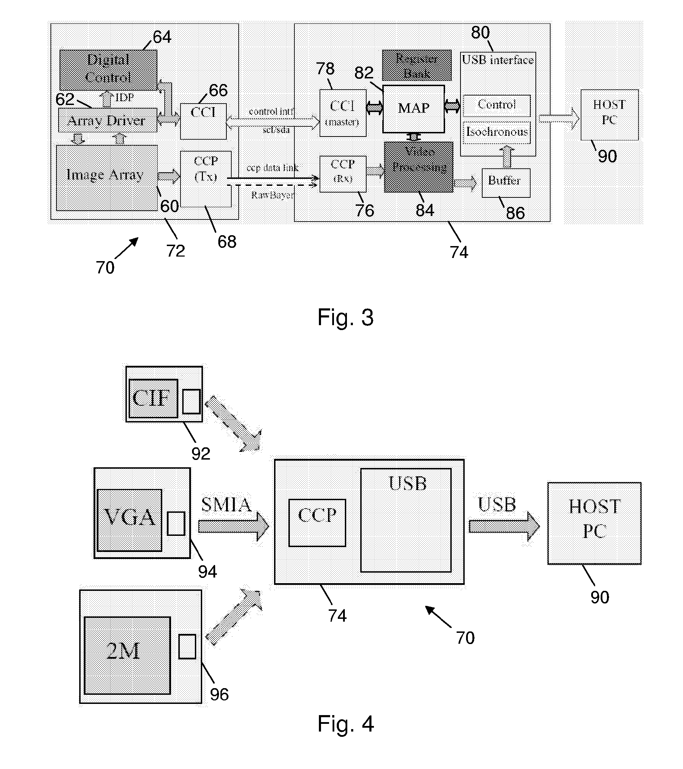

Referring to Fig. 3, a web camera 70 comprises an SMIA image sensor 72 and an image sensor coprocessor 74 according to the present invention and is connected to a personal computer 90. The SMIA image sensor 72 contains the same features as the SMIA image sensor 52 as described with reference to Fig. 2 and therefore like features have been given like numbering.

The image sensor coprocessor 74 comprises a SMIA image sensor interface, in the form of a Camera Control Processor (CCP) 76 and a Camera Control Interface 78 (CCI), to enable communications with the SMIA image sensor 72 using the SMIA standard. Furthermore, the coprocessor 74 comprises a device interface, which in this example, is a USB interface 80.

As the USB interface 80 requires to adhere to the USB video class standard and the SMIA image sensor interface requires to adhere to the SMIA standard, a protocol translation module 82 maps instructions from one standard to that of the other.

The SMIA standard includes the CCP (Camera Control Processor) Sub-LVDS (Sub-Low Voltage Differential Signaling) data link from the image sensor to the processor performing video processing.

The co-processor then processes the raw video data from the SMIA image sensor and output it in the required format such as USB 1.0 or USB 2.0.

In a further embodiment, the image sensor coprocessor may have multiple inputs from image sensors by having additional CCP interfaces. This would allow the co-processor send multiple video streams down the USB link. This could be used in applications such as stereo vision.

As well as creating PC imaging products the proposed co-processor could be used to validate SMIA camera in a PC environment due to the high bandwidth available with USB2.0.

The invention makes it possible to have a co-processor that takes raw video input from a SMIA camera, developed for the mobile market, and converts it to a format compatible with PC products. This single co-processor development would give the non-mobile market rapid access to the wide range of image sensors made for the mobile market without the need for custom PC developments

Improvements and modifications may be incorporated without departing from the scope of the present invention.

## Claims

1. An image sensor coprocessor comprising an SMIA image sensor interface for accepting data from an SMIA image sensor, a device interface for transmitting and receiving instructions and data from a device and a protocol translation module, wherein the protocol translation module enables instructions received at the device interface to be translated to instructions for the SMIA image sensor interface and sensor data from the SMIA image sensor interface to be translated to device data for the device interface.

2. A coprocessor as claimed in claim 1, wherein the SMIA image sensor interface comprises a camera control interface module for transmitting and receiving instructions and a camera control processor for receiving the sensor data.

3. A coprocessor as claimed in claim 1 or claim 2, wherein the device interface is a Universal Serial Bus (USB) interface.

4. A coprocessor as claimed in claim 3, wherein the USE interface conforms to one or more of the following standards: USE 2.0 standard; or USE 1.0 standard.

5. A coprocessor as claimed in any of claims 1 to 4, wherein the sensor data is a sensor video stream and, as such, the device data is a device video stream.

6. A coprocessor as claimed in claim 5, wherein the coprocessor further comprises a video processing module to process the device video stream prior to being received at the device interface.

7. A coprocessor as claimed in claim 6 wherein the coprocessor enables the device video stream received at the device interface to be unprocessed.

8. A coprocessor as claimed in any of claims 1 to 7, wherein the coprocessor comprises two or more SMIA image sensor interfaces and two or more sets of sensor data are processed by the protocol translation module which then generates two or more sets of device data for the device interface.

9. A web-camera comprising an image sensor coprocessor according to claims 1 to 8.

10. A portable computer comprising an image sensor coprocessor according to claims 1 to 8.

11. A personal digital assistant (PDA) comprising an image sensor coprocessor according to claims 1 to 8.
